# FASCICULE DE BREVET EUROPEEN

(11) **EP 4 563 420 B1**
(45) Date de publication et mention de la délivrance du brevet: **21.10.2026**
(21) Numéro de dépôt: 24210575.7
(22) Date de dépôt: 04.11.2024
(51) Int. Cl.: B60T 7/04, B60T 7/06

(54) **DISPOSITIF DE COMMANDE DU FREINAGE D'UN VÉHICULE AUTOMOBILE**
BREMSSTEUERVORRICHTUNG FÜR EIN KRAFTFAHRZEUG
BRAKE CONTROL DEVICE FOR A MOTOR VEHICLE

(30) Priorité: 01.12.2023 FR 2313436
(43) Date de publication de la demande: 04.06.2025
(73) Titulaire: Robert Bosch GmbH, 70442 Stuttgart (DE)
(72) Inventeur: Anderson, Chris, 75002 Paris (FR)

(56) Documents cités:
- CN-A- 116 803 776
- US-A- 5 934 152
- US-A1- 2002 117 893

## Description

### DOMAINE DE L'INVENTION

La présente invention se rapporte à un dispositif de commande par fil du freinage d'un véhicule relié à l'unité centrale de gestion du véhicule qui commande le système global de freinage comprenant les freins des roues, le freinage dynamique et une action sur le moteur et la transmission.

### ETAT DE LA TECHNIQUE

Les constructeurs automobiles envisagent de plus en plus la commande des fonctions de freinage d'un véhicule par la commande par fil et la suppression des pédales mécaniques encombrantes, nécessitant des courses importantes. En particulier, dans le cas du freinage, la suppression de la redondance mécanique permet de remplacer les systèmes mécaniques par des éléments de commande de type patin, beaucoup plus petits, qui sont fixés au plancher du véhicule et ont une course très réduite par comparaison aux systèmes traditionnels voire aucune course dans le cas d'une commande par la seule force.

On connaît différents concepts de patins. Certains utilisent seulement la commande par la force sans déplacement mécanique et d'autres utilisent à la fois la force et un certain niveau de déplacement pour une meilleure capacité de commande en utilisant un capteur de course.

En termes de sensation de pédale et de capacité de contrôle, il peut être avantageux de réaliser une caractéristique à« double taux» ou à course non linéaire / force comme cela est le cas des systèmes classiques par fil et sans fil sachant que la plage globale de la course est réduite de façon importante par rapport aux systèmes classiques.

Mais, un tel système dédoublé, (course non linéaire / force), nécessite un réglage précis par rapport au niveau de réponse du véhicule défini par le contrôleur en fonction du signal fourni par le capteur de course de sorte que des variations de course / force subies par le conducteur 40 soient synchronisées de manière idéale avec les variations de réponse du véhicule, gérées par programme. Ce réglage peut être déréglé par un capteur de course qui ne permet pas de détecter les variations de la force du ressort ce qui se traduit par une synchronisation non cohérente, affectée par les tolérances dans les deux parties du système (la partie électronique et la partie mécanique).

En outre, le document CN 116 803 776 A divulgue un dispositif de commande du système de freinage d'un véhicule comprenant une structure en forme de boîtier plat, un patin d'actionnement sur le dessus de la structure, mobile entre une position de repos relevée et une position d'actionnement en fonction de la poussée exercée par le conducteur pour demander du freinage, et un capteur agencé pour détecter l'actionnement du patin d'actionnement.

### BUT DE L'INVENTION

L'invention a pour but de développer un dispositif de commande de freinage, peu encombrant, plat, s'intégrant bien à l'emplacement habituel de la pédale de frein, qui soit facile à atteindre et à actionner, permet de générer un signal de commande traduisant fidèlement la demande de freinage du conducteur pour l'appliquer aux différents moyens du système de freinage du véhicule ; il doit notamment assurer le synchronisme du freinage du véhicule avec la sensation de pédale et le ressenti du freinage par le conducteur ; et aussi sécuriser le traitement de la demande du conducteur par une détection en parallèle par des capteurs relevant de techniques différentes.

### EXPOSE ET AVANTAGES DE L'INVENTION

A cet effet, l'invention a pour objet une structure en forme de boîtier plat, un patin d'actionnement sur le dessus de la structure, mobile entre une position de repos relevée par rapport au-dessus et une position d'actionnement, enfoncée par rapport à la position de repos en fonction de la poussée exercée sur le patin par le conducteur pour demander du freinage et un capteur d'effort, dispositif caractérisé en ce que le patin d'actionnement est relié au capteur d'effort par un ressort différentiel ayant une surface de base venant sur une surface d'appui de la structure combinée à une surface d'appui de capteur représentant une fraction de la surface de base pour répartir l'effort exercé sur le patin entre la surface d'appui de structure et la surface d'appui de capteur.

En d'autres termes, l'invention a pour objet un dispositif de commande du système de freinage d'un véhicule défini par le revendication indépendante' 1.

En particulier, la structure a un cylindre débouchant dans le dessus de la structure recevant un piston relié au patin et ayant un fond formant une couronne d'appui constituant la surface d'appui de structure et un appui de capteur constituant la surface d'appui de capteur.

Suivant une autre caractéristique, le dispositif de commande est caractérisé en ce qu'il comprend un ressort auxiliaire en série avec le ressort différentiel et recevant la poussée du patin, un piston flottant entre le ressort auxiliaire et le ressort différentiel et, une butée entre le piston flottant et le patin limitant la course du ressort auxiliaire à une course (a), pour ne faire intervenir que le seul ressort différentiel au-delà d'un effort correspondant à la venue en butée du piston flottant.

Selon une caractéristique, la surface d'appui de la structure est une couronne d'appui et, la surface d'appui de capteur est la surface entourée par la couronne d'appui du fond de façon que l'effort exercé sur le dessus du patin soit transmise à la couronne d'appui et à l'appui de capteur.

La solution proposée est un dispositif compact pour assurer une commande par course / effort avec un capteur d'effort intrinsèquement insensible aux tolérances de synchronisation entre (course / effort) et (décélération / accélération). De plus, la répartition de l'effort permet d'utiliser un capteur de force ayant une plage de mesure très inférieure à la poussée que le conducteur peut exercer ; le capteur sera plus précis.

Le ressort différentiel est composé d'une couronne périphérique élastique venant sur la surface d'appui de structure et d'un dôme central élastique venant sur la surface d'appui de capteur, le dessus de la couronne élastique et celui du dôme élastique constituant la surface d'appui du patin.

Suivant une autre caractéristique, le bord de la couronne du ressort différentiel comporte des évidements formant des évents permettant l'échange d'air entre la cavité, formée par la couronne et l'extérieur, le bord extérieur de la base de la couronne ayant un joint périphérique, et dans ce cas, avantageusement, la pastille cylindrique formant le ressort différentiel est en une matière élastique dont la compressibilité dépend de la composition choisie dans cette matière élastique.

Contrairement aux systèmes de frein classiques, dans lesquels le choix des matières est souvent limité par la compatibilité avec le liquide de frein et la température de l'enceinte du moteur, dans le cas du dispositif de commande fonctionnant à sec et installé dans l'habitacle des passagers, comme celui de l'invention, le choix de la matière permet plus facilement de donner la priorité à des caractéristiques telles que l'insensibilité aux basses températures, sans avoir à faire de compromis.

Le ressort différentiel est une pièce moulée en une matière incompressible, élastiquement déformable et composée d'une couronne de section triangulaire reliée à un dôme central par la base.

Le ressort différentiel selon l'invention permet un choix très large de matériaux assurant un fonctionnement insensible à la température, offrant de multiples possibilités non seulement de diviser la poussée reçue pour n'en exploiter qu'une fraction réduite pour générer le signal de commande, mais, il offre également des possibilités très grandes de constante de ressort selon les objectifs à réaliser par le système de freinage.

Selon une autre caractéristique, le dispositif de commande comprend un piston auxiliaire occupant la surface d'appui de capteur pour recevoir l'effort du ressort différentiel exercée sur la surface d'appui de capteur et transmettre cet effort au capteur.

Suivant une autre caractéristique, le piston flottant comprend : une butée sur le dessus du piston pour former l'intervalle avec le patin, pour fonctionner avec les deux ressorts en série au cours de la première phase du mouvement du patin jusqu'à un seuil de poussée correspondant au contact entre la butée et le patin et par une deuxième phase de mouvements d'actionnement du patin au-delà du seuil avec le seul ressort différentiel.

Pour éviter des effets de coussin d'air avec dépression ou compression d'air, susceptibles de perturber la réponse du ressort différentiel, le bord supérieur de la couronne du ressort différentiel comporte des évidements formant des évents permettant l'échange d'air entre la cavité, formée par la couronne et l'extérieur, le bord extérieur de la base de la couronne ayant un joint périphérique.

### BREVE DESCRIPTION DES DESSINS

La présente invention sera décrite ci-après de manière plus détaillée à l'aide de modes de réalisation d'un dispositif selon l'invention représenté dans les dessins annexés dans lesquels :
[Fig. 1] vue schématique d'un premier mode de réalisation du dispositif de commande de freinage selon l'invention,
[Fig. 2] vue en perspective du ressort différentiel,
[Fig. 2A] vue en perspective coupée du ressort différentiel,
[Fig. 3] vue schématique d'un autre mode de réalisation du dispositif de commande de freinage selon l'invention,
[Fig. 3A] vue du dispositif de commande de la figure 3A en position comprimée,
[Fig. 4] vue schématique d'un autre mode de réalisation du dispositif de commande de freinage selon l'invention,
[Fig. 4A] vue du dispositif de commande de la figure 4 en position comprimée,
[Fig. 5] courbes représentant le signal du capteur d'effort et la poussée sur le patin en fonction de la course du patin,
[Fig. 6] vue en coupe schématique d'une variante de réalisation du dispositif de commande de la figure 1
[Fig. 7] vue en coupe schématique de différentes variantes du mode de réalisation de la figure 3.

### DESCRIPTION DE MODES DE REALISATION DE L'INVENTION

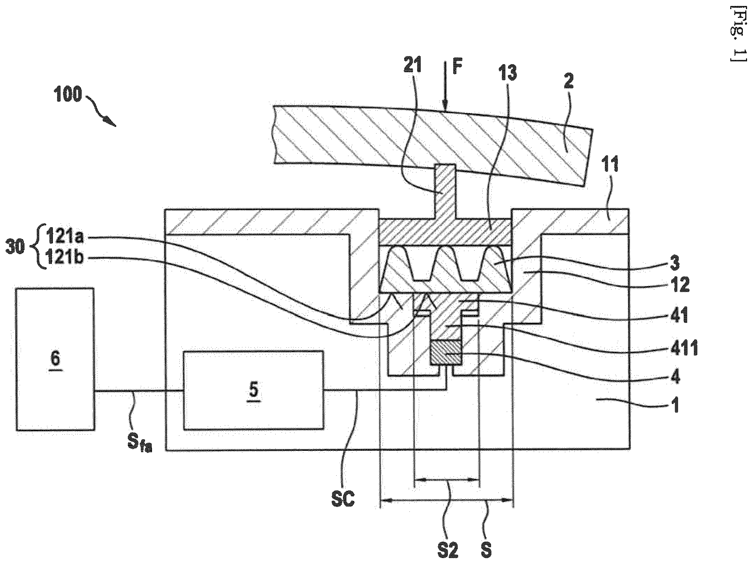

Selon la figure 1, l'invention a pour objet un dispositif de commande 100 du freinage d'un véhicule relié à l'unité centrale 6 de gestion du véhicule qui commande le système global de freinage comprenant les freins des roues, le freinage dynamique et l'action sur le moteur et la transmission.

Le dispositif de commande 100 se compose d'une structure 1 en forme de boîtier plat portant un patin d'actionnement 2 sur son dessus 11. Il est installé dans l'habitacle du véhicule, de préférence, à l'endroit habituel de la pédale de frein en utilisant toutefois les possibilités offertes par son très faible encombrement. Il faut souligner que les dimensions du dispositif représenté dans les dessins sont exagérées pour faciliter la lecture des dessins. En réalité, l'épaisseur du dispositif est de l'ordre de 3 à 4 centimètres et la course du patin 2 qui reçoit la poussée F du pied du conducteur est de l'ordre de 10 millimètres.

Le dispositif 100 comprend un cylindre 12 débouchant dans le dessus 11 du boîtier 1. Il reçoit un piston 13 relié au patin 2 par un organe de liaison 21. Le cylindre 12, loge un ressort différentiel 3 appliqué contre le fond 121 du cylindre. Le piston 13 est appuyé sur le dessus du ressort différentiel 3.

Le dessous du ressort différentiel 3 forme une surface de base 30 qui s'appuie sur le fond 121 du cylindre 12. Plus précisément, le fond 121 a une surface d'appui de structure 121a en forme de couronne d'appui 121a' autour d'une ouverture formant une surface d'appui de capteur 121b pour un capteur d'effort 4. Le capteur d'effort4 est relié à un circuit de traitement 5 auquel il fournit le signal de capteur Sc. Le circuit de traitement 5 traite ce signal pour générer un signal de frein Sfr transmis à l'unité centrale 6 qui commande le système de freinage.

Le capteur 4 est sensiblement au niveau du fond 121, sous le ressort différentiel 3 pour recevoir la poussée ou effort F exercé sur le patin 2 et transmis au piston 13 qui s'appuie sur le dessus du ressort différentiel 3. La surface d'appui 30 du ressort différentiel 3 vient, d'une part, sur la couronne d'appui 121a' et d'autre part, sur le dessus du capteur 4 par la surface d'appui 121b' entourée de la couronne d'appui 121a'.

La surface du fond 121 est figurée par la référence S. La surface de l'appui de capteur 121b' est figurée par la référence S2. La surface S du fond 121 est la somme de la surface Si de la couronne d'appui 121a' et de la surface S2 de l'appui de capteur 121b'.

L'effort F transmis par le piston 13 au ressort différentiel 3 est ainsi divisé en une partie reçue par la surface d'appui de structure 121a qui est la couronne d'appui 121a' solidaire de la structure 1 et une partie reçue par la surface d'appui de capteur 121b qui est l'appui de capteur 121b', transmise au capteur d'effort 4. L'effort appliqué au capteur 4 représente ainsi une fraction de l'effort F exercé sur le patin selon le rapport S2/S de la surface S2 de l'appui de capteur 121b' divisée par la surface S du fond 121 à laquelle correspond en général la surface de base 30 du ressort 3. Cela permet d'utiliser un capteur 4 dont la plage de détection correspond à une fraction seulement de ce qui serait nécessaire pour recevoir l'intégralité de l'effort F.

Selon le mode de réalisation représenté, le capteur d'effort 4 n'est pas directement en contact avec la surface de base 30 du ressort différentiel 3, mais, par l'intermédiaire d'un piston auxiliaire 41 dont la surface est celle de l'ouverture du fond 121 définissant l'appui de capteur 121b' mais dont la tige 411 a une section égale à celle de la section du capteur 4. Cela permet de rendre la surface du capteur 4 indépendante de la surface d'appui de capteur 121b, l'adaptation est faite par le piston auxiliaire 41. L'effort est ainsi transmis dans tous les cas, de façon représentative au piston 41.

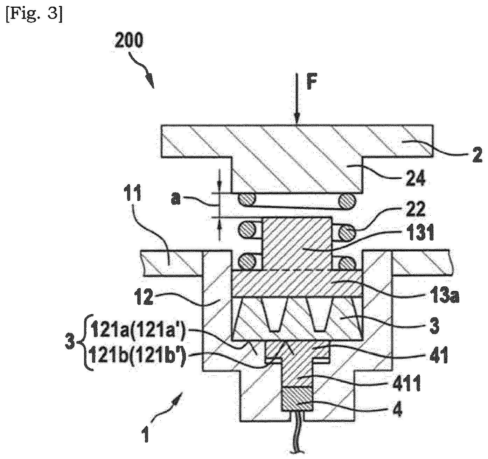

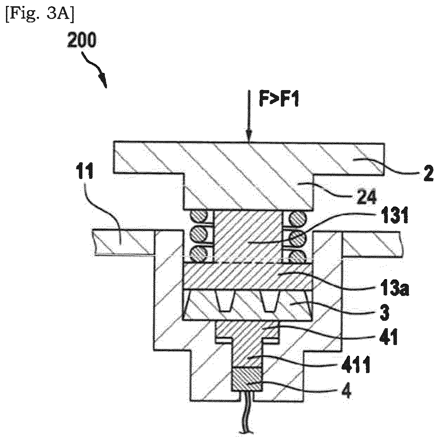

Dans les figures 1, 3, 3A, le ressort différentiel 3 est orienté avec sa couronne 31 et son dôme 32 tournés vers le piston 13 ou le patin 2 ; la position renversée est également possible, la couronne 31 s'appuyant sur la couronne d'appui 121a et le dôme 32 sur l'appui de capteur 121b occupé, soit directement par le capteur 4, soit par son piston auxiliaire 41.

Le patin 2 est maintenu en position de repos sur le dessus 11 de la structure 1 par un simple ressort de rappel non représenté et qui n'intervient pas dans la dynamique du dispositif de commande 100.

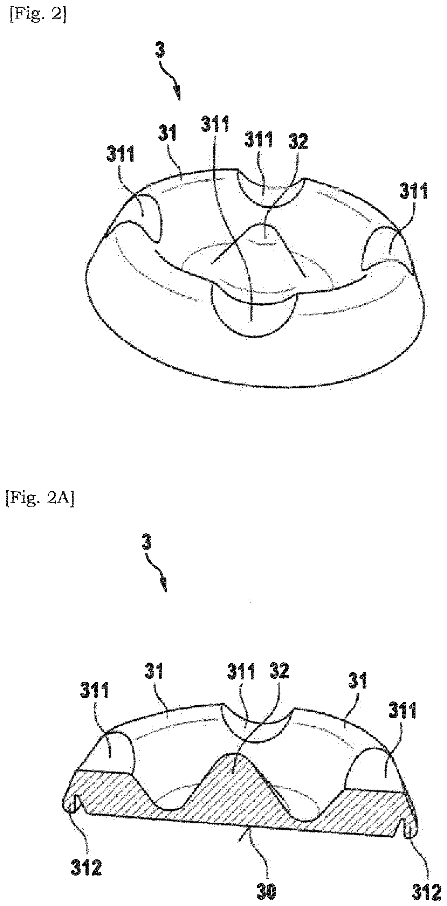

Les figures 2, 2A montrent un mode de réalisation du ressort différentiel 3 composé d'une couronne périphérique 31 de section triangulaire ou trapézoïdale, entourant une cavité 33 avec un dôme central 32 et une base 34. La couronne 31 comporte des évidements 311 permettant la communication avec l'extérieur de la cavité 33 qu'elle délimite lorsque le piston 13 est appuyé sur le dessus de la couronne. La base 34 a un dessous constituant la surface de base 30 s'appuyant sur les surfaces 121a, 121b.

Très schématiquement, comme le dôme 32 est associé par sa forme et sa position au capteur 4 et que la couronne 31 est associée à la couronne d'appui 121a solidaire de la structure 1, l'effort F transmis par le piston 13 se divise en un effort exercé sur la couronne d'appui 121a' et reçue par la structure 1 et un effort exercé sur le capteur d'effort 4.

En première approche, la répartition de l'effort entre la surface d'appui de structure 121a et la surface d'appui de capteur 121b ou la surface du piston auxiliaire 41 du capteur 4 est proportionnelle au rapport des surfaces S2 et S ou S1 et S2. Mais, dans le cas du ressort différentiel 3, la forme du ressort composé de la couronne 31, du dôme 32, de la cavité 33 et de la base 34, font aussi dépendre cette répartition de l'effort de cette forme tridimensionnelle et de la matière dans laquelle elle est réalisée. Ces caractéristiques de forme et de matière sont choisies pour que la répartition permette de ne transmettre au capteur d'effort 4, qu'une fraction déterminée, réduite, mais représentative de l'effort F. La constante de ressort équivalente globale k3 du ressort 3 est donc schématiquement la combinaison de la constante de la couronne 31, de celle du dôme 32 et de celle de la base 34.

Le ressort différentiel 30 dans sa forme décrite ci-dessus, peut, pour sa constante de ressort, être considérée comme la combinaison de ressort en parallèle et en série dont la combinaison se fait selon les règles de combinaison de ressort en série et en parallèle.

En d'autres termes, cette constante équivalente k3 est la combinaison des constantes des trois parties certes- solidaires, mais auxquelles on peut associer une constante de ressort propre pour ainsi varier selon la déformation imposée par le piston 13 à chacune de ces parties 31, 32, 33, 34. Cela permet d'avoir une constante équivalente, combinaison de trois constantes particulières des trois éléments du ressort 3 considérés comme des ressorts associés en parallèle et en série. Cette constante n'est pas nécessairement fixe ; la courbe effort / course pourra avoir par l'adaptation des éléments de ce ressort 3, une forme courbe à pente plus ou moins accentuée vers la fin de course du patin 2.

En résumé, la forme très simple du ressort différentiel 3, par exemple, en un élastomère, permet de ne transmettre au capteur d'effort 4, qu'une fraction de l'effort appliqué au patin 2 qui peut être relativement faible. Cela permet d'utiliser, un capteur 4 prévu pour des efforts relativement faibles, correspondant à une fraction seulement de l'effort parfois brutal que le conducteur peut exercer sur le patin et qui est transmis intégralement au piston 13.

Le bord de la base 34 du ressort 3 est bordé par un joint périphérique 312 réalisant l'étanchéité entre le dessus du ressort 3, exposé à l'air ambiant et son dessous avec le capteur 4 et le protégeant ainsi.

La figure 3 montre un autre mode de réalisation 200 du dispositif de commande du freinage d'un véhicule qui diffère du premier mode de réalisation 100 par la liaison entre le patin 2 et le dessus du ressort différentiel 3 par un piston flottant 13a et un ressort auxiliaire 22. Au repos et pendant la première phase de fonctionnement, le patin 2 et le piston flottant 13a sont séparés d'un intervalle (a).

La figure 3A montre le dispositif de commande 200 lorsque le patin 2 est en appui contre le piston flottant 13a (par la butée 131 de celui-ci) et que l'effort est au moins égal au seuil d'effort F1.

Le ressort auxiliaire 22 interposé entre le patin 2 et le piston 13a est en série avec le ressort différentiel 3 dont il est séparé.

Le piston flottant 13a non solidaire du patin 2 comporte sur le dessus, une butée 131 délimitant avec le dessous du patin muni, par exemple, d'un relief 24, l'intervalle (a) limitant l'action du ressort auxiliaire 22.

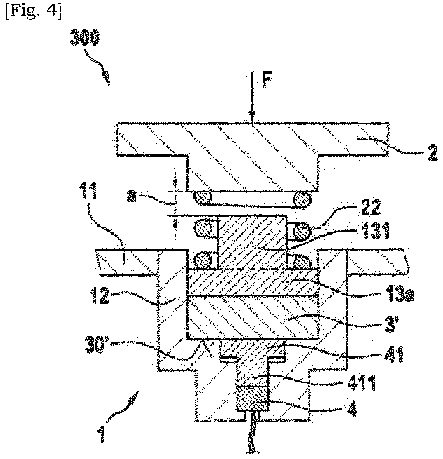

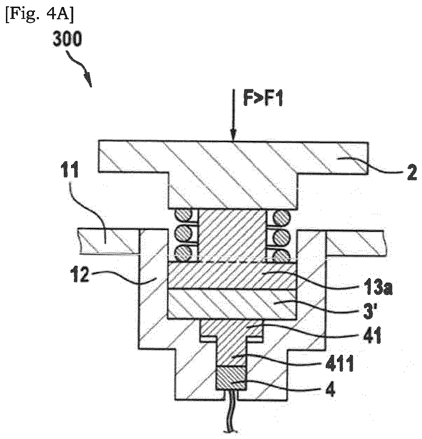

La figure 4 montre une variante 300 du dispositif de commande de la figure 3. Dans cette variante, le ressort différentiel 3' est une pastille élastique 3a' adaptée à la section du cylindre 12 et couvrant la surface d'appui de structure 121a, ici la couronne d'appui 121'a et la surface d'appui de capteur 121b, ici l'appui de capteur 121b' par sa surface de base 30'.

L'effort F transmis au piston flottant 13a est réparti entre la surface de la couronne d'appui 121a' et celle de l'appui de capteur 121b' en première approximation, en fonction des surfaces respectives.

L'effort exercé sur l'appui de capteur 121b' est transmis par le piston auxiliaire 41 au capteur 4. La pastille élastique 3a' constituant le ressort différentiel 3' est en une matière élastique de compressibilité adaptée pour avoir la constante de ressort voulue et ainsi la réponse voulue après le seuil F1.

Cette forme de réalisation du ressort différentiel 3' permet d'avoir, de manière simple, une constante de ressort dans une plage étendue allant jusqu'à une constante très importante, voisine de l'incompressibilité selon la composition de la matière constituant le ressort différentiel 3', pour influencer, de manière très importante, la sensation de pédale au-delà de la course (a) correspondant au seuil d'effort F1.

La matière élastique du ressort différentiel 3' peut être une mousse dont la porosité permet d'adapter la compressibilité selon les applications, considérablement jusqu'à une matière élastique incompressible. Dans ce cas, la course, au-delà de celle du seuil d'effort F1 est pratiquement nulle et à partir de là, le freinage demandé résultera de la seule transmission d'effort sans course de patin.

La constante du ressort différentiel 3' intervient comme celle du ressort différentiel 3 dans la constante de ressort équivalente ke, sur toute la plage de fonctionnement du dispositif de commande. Comme la constante du ressort 3' peut varier plus simplement et plus fortement que celle du ressort différentiel 3, elle intervient aussi plus fortement dans la constante équivalente ke de la combinaison du ressort différentiel 3, 3' et du ressort auxiliaire 22 en série.

En application de la loi de combinaison de la constante de ressorts montés en série 1/ke=1/k1+1/k2, la constante k1 a priori forte, voire très importante, intervient peu dans la combinaison 1/ke=1/k1+1/k2 puisque le facteur 1/k2 tend vers 0 de sorte que la constante équivalente ke est alors pratiquement égale à la constante k1 du seul ressort auxiliaire 22.

Après le passage du seuil d'effort F1, le ressort auxiliaire 22 n'intervient plus et la constante est celle du ressort différentiel 3'.

En conclusion, le ressort différentiel 3' dont la compressibilité lorsqu'elle est très faible, génère une réponse très forte :
- la course du patin 2 est réduite et la poussée est très forte,
- cela revient à dire que le capteur 4 reçoit pratiquement la fraction de l'effort F correspondant à son appui de capteur 121b' pour un patin 2 qui reste pratiquement immobile (course quasiment nulle),
- cette course est quasiment nulle si le ressort différentiel 3' est élastique, mais non compressible.

De façon plus détaillée, dans le mode de réalisation selon les figures 3 ou 4, le ressort auxiliaire 22 et le ressort différentiel 3, 3' étant en série, la constante équivalente ke du montage en série des deux ressorts est l'inverse de la somme des inverses des deux constantes k3 et k22 : $Ke = \frac{k 3 \cdot k 22}{k 3 + k 22}$

Le ressort auxiliaire 22 n'intervient dans le fonctionnement du patin 2 que pendant la première phase de commande par le patin jusqu'à ce que l'effort F comprime le ressort auxiliaire 22 de la longueur (a) soit : $a = k 22 \cdot F 1$ $d ′ où F 1 = \frac{a}{k 22}$

Jusqu'à cet effort F1 constituant un seuil d'effort exercé sur le patin 2, les deux ressorts 3, 22 interviennent en combinaison. Mais au-delà de ce seuil F1, la poussée F (>F1) ne s'applique plus qu'au ressort différentiel 3, 3' de constante k3, k3'. Comme cette constante k3, k3' est supérieure à la constante équivalente ke, le gradient course / effort est plus grand (pente plus importante).

Le passage du seuil d'effort F1, à cause de la discontinuité des gradients de part et d'autre de ce seuil fait que le dépassement du seuil F1 est très perceptible par le conducteur dans les deux sens de passage de ce seuil.

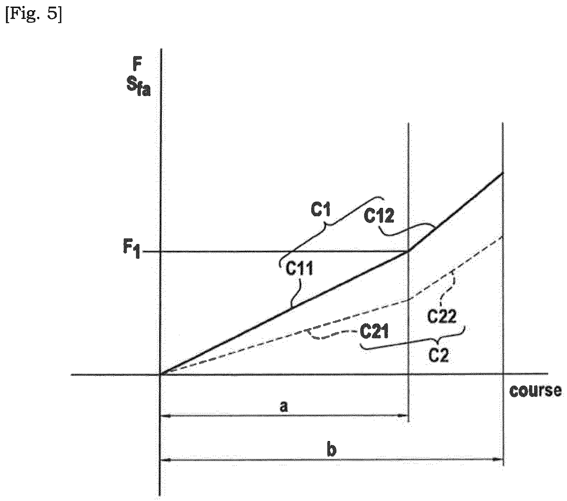

La figure 5 montre les courbes C1, C2 correspondant à ce fonctionnement avec le seuil d'effort F1.

Le graphique schématise la commande du freinage :
- en abscisses : la course du patin 2,
- en ordonnées :
   * sur une échelle : l'effort appliqué sur le patin 2,
   * sur une autre échelle : le signal de commande Sfr.

La courbe C1 de l'effort appliqué sur le patin 2 ou la fraction de l'effort reçu sur l'appui de capteur 121a' est composée d'un segment C11 pour l'effort exercé jusqu'au seuil F1 soit la course (a). Au-delà, l'effort est représenté par le segment C12 qui correspond à l'action du seul ressort différentiel 3, 3'.

Pour les raisons déjà développées, cette partie de courbe C12 est de pente plus importante que celle de la partie C11. Il y a nécessairement une discontinuité à la fin de la course (a) puisque dans le cas général, il ne peut y avoir continuité à cause de la différence des constantes de ressort, donnant la constante équivalente ke pour les deux ressorts 22 et 3, 3' en série et la seule constante k3, k3' applicable après le seuil F1. Les courbes C11, C12 sont des segments de droite puisque les constantes k22 et k3, k3' sont fixes. Mais, si ces constantes de ressort sont fonction de l'effort, les courbes C11, C12 seront des segments non droits.

Dans le cas du ressort différentiel 3', si celui-ci est très faiblement compressible, le segment C12 est relevé et devient pratiquement vertical, ce qui correspond à une réduction considérable de la course (course totale b) au-delà de la course (a) correspondant au seuil F1.

La courbe C2 représente le signal de frein Sfr qui suit la courbe C1.

En résumé, initialement, lorsque la pédale ou patin 2 est enfoncée, le gradient de la réaction ressentie par le conducteur et détectée par le capteur 4 correspond à la constante équivalente du ressort 22 et du ressort différentiel 3, en série. Lorsque le patin 2 arrive en contact avec la butée 131, le gradient course / force ressenti par le conducteur et détecté, varie de manière importante pour le passage de la commande fondée principalement sur la course vers la commande fondée principalement sur l'effort. Ces différents modes de commande sont souhaitables pour avoir une meilleure sensation de pédale et le ressenti physique global avec une meilleure possibilité de contrôle en fonction d'événements de conduite et des conditions de circulation.

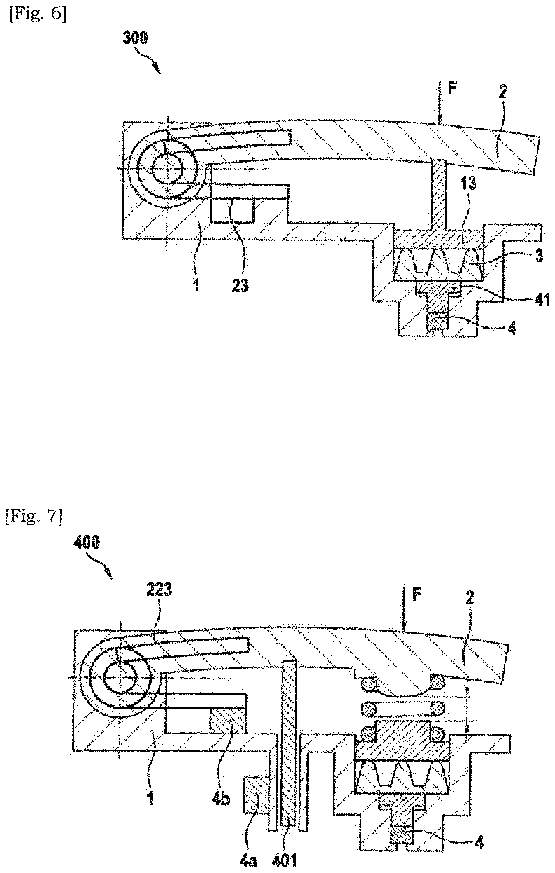

La figure 6 montre une variante 400 du dispositif de commande 100 de la figure 1.

Selon cette variante, le patin 2 est relié à la structure 1 par une articulation 1 composée d'un axe 16 porté par des paliers 10 de la structure 1 et de l'extrémité du patin 2 associé à cet axe de pivotement.

L'articulation 16 est complétée par un ressort 17 de rappel en forme de ressort de torsion à deux branches 171, 172 dont une branche 171' est associée au patin 2 en étant, par exemple, intégrée dans celui-ci et l'autre branche 172 s'appuie sur le dessus de la structure 1. Le ressort 17 engendre ainsi une force de rappel qui maintient le patin 2 en position de repos sur le dessus 11 du boîtier.

Dans cet exemple, comme dans les autres exemples, l'échelle des dimensions n'est pas respectée. Le dispositif selon l'invention, c'est-à-dire la structure 1 en forme de boîtier et le patin 2 au-dessus du boîtier correspondent à une forme très plate et à un encombrement en épaisseur très réduit. Dans ces conditions, le mouvement du patin 2 par rapport au dessus 11 est très faible de sorte que le mouvement du patin 2 par rapport au piston 13 peut être assimilé à un mouvement de translation et l'effort F est transmis quasi intégralement au piston 13 sans composante transversale.

La figure 7 montre un mode de réalisation 400 avec d'autres compléments possibles tels qu'un ou plusieurs capteurs indépendants 4, 4a, 4b. Cela peut être nécessaire pour assurer une redondance, mais, également pour avoir une détection plus précise de la plage de blocage de la course à la fin de l'intervalle (a). Les capteurs 4, 4a, 4b peuvent détecter la course ou l'effort et leurs signaux sont traités simultanément par le circuit de traitement 5 pour avoir une évaluation optimale de la demande du conducteur.

Le capteur de course 4a est un capteur sans contact combiné à une tige de commande 4a1 qui suit le déplacement du patin 2. A titre d'exemple, la tige 4a1 peut avoir un aimant permanent pour indiquer sa position détectée par le capteur 4a.

Le capteur d'effort 4 peut, à titre d'exemple, détecter la caractéristique course / force du ressort 3 lorsque le patin 2 est actionné.

Le capteur de pivotement 4b qui est un autre capteur d'effort peut être associé au patin 2 pour détecter son pivotement par rapport à la structure 1.

Ces différents capteurs 4, 4a, 4b peuvent être utilisés séparément ou en combinaison, en complément du capteur d'effort du dispositif 200 décrit à la figure 3.

### NOMENCLATURE DES ELEMENTS PRINCIPAUX

100, 200, 300, 400 Dispositifs de commande du freinage
1 Structure en forme de boîtier
11 Dessus du boîtier
12 Cylindre
121 Fond du cylindre
121a surface d'appui de structure
121a' Couronne d'appui
121b Surface d'appui de capteur
121b' Appui de capteur
13 Piston
13aPiston flottant
131 Butée
16 Articulation
161 Axe
162 Palier
17 Ressort de rappel
171 Branche
172 Branche
2 Patin
21 Organe de liaison relié au piston
22 Ressort auxiliaire
23 Ressort de rappel
24 Relief
3, 3' Ressort différentiel
3a' Pastille cylindrique
30, 30' Surface de base
31 Couronne
311 Evidements
312 Joint périphérique
32 Dôme
33 Base
4 Capteur d'effort
4a Capteur de course
4b Autre capteur d'effort
41 Piston auxiliaire
411 Tige du piston auxiliaire
5 Circuit de traitement
6 Unité centrale de gestion
S1 Surface de la section du fond 121
S2 Surface de la section du capteur
S1 Surface de la couronne d'appui 121a
S2 Surface de l'appui de capteur 121b
F Effort sur le patin
F1 Seuil d'effort
(a) Intervalle
(b) Course totale du patin

## Revendications

1. Dispositif de commande du système de freinage d'un véhicule comprenant:
- une structure ( 1) en forme de boîtier plat,
- un patin d'actionnement (2) sur le dessus (11) de la structure (1), mobile entre une position de repos relevée par rapport au-dessus (11) et une position d'actionnement, enfoncée par rapport à la position de repos en fonction de la poussée (F) exercée sur le patin (2)
- par le conducteur pour demander du freinage et
- un capteur d'effort (4),
dans lequel le patin d'actionnement (2) est relié au capteur d'effort (4) par un ressort différentiel (3) ayant une surface de base (30) venant sur une surface d'appui (121a) de la structure (1) combinée à une surface d'appui de capteur (121b) représentant une fraction de la surface de base (30) pour répartir l'effort exercé sur le patin (2) entre la surface d'appui de structure (121a) et la surface d'appui de capteur (121b), le dispositif étant **caractérisé par le fait que** le ressort différentiel (3) est composé d'une couronne périphérique élastique (31) venant sur la surface d'appui de structure (121a) et d'un dôme central élastique (32) venant sur la surface d'appui de capteur (121b), le dessus de la couronne élastique (31) et celui du dôme élastique (32) constituant la surface d'appui du patin (2), et dans lequel le ressort différentiel (3) est une pièce moulée en une matière incompressible, élastiquement déformable, la couronne (31) ayant une section triangulaire ou trapézoïdale reliée au dôme central (32) par une base (33).

2. Dispositif selon la revendication 1,
**caractérisé en ce que**
la structure (1) a un cylindre (12) débouchant dans le dessus (11) de la structure (1) recevant un piston (13) relié au patin (2) et ayant un fond (121) formant une couronne d'appui (121a') constituant la surface d'appui de structure (121a) et un appui de capteur (121b') constituant la surface d'appui de capteur (121b).

3. Dispositif selon la revendication 1,
**caractérisé en ce qu'**il comprend
- un ressort auxiliaire (22) en série avec le ressort différentiel (3) et recevant la poussée du patin (2),
- un piston flottant (13a) entre le ressort auxiliaire (22) et le ressort différentiel (3) et,
- une butée (131) entre le piston flottant (13a) et le patin (2) limitant la course du ressort auxiliaire (22) à une course (a), pour ne faire intervenir que le seul ressort différentiel (3) au-delà d'un effort (F1) correspondant à la venue en butée du piston flottant (13a).

4. Dispositif selon la revendication 1,
**caractérisé en ce que**
- la surface d'appui de la structure (121a) est une couronne d'appui (121a') et,
- la surface d'appui de capteur (121b) est la surface entourée par la couronne d'appui (121a') du fond (121) de façon que l'effort (F) exercé sur le dessus du patin (2) soit transmise à la couronne d'appui (121a') et à l'appui de capteur (121b').

5. Dispositif selon les revendications 3 et 4,
**caractérisé en ce que**
le piston flottant (13a) comprend:
- une butée (131) sur le dessus du piston (13a) pour former l'intervalle (a) avec le patin (2), pour fonctionner avec les deux ressorts (3; 13) en série au cours de la première phase du mouvement du patin (2) jusqu'à un seuil de poussée (F1) correspondant au contact entre la butée (131) et le patin (2) et par une deuxième phase de mouvement d'actionnement du patin (2) au-delà du seuil (F1) avec le seul ressort différentiel (3).

6. Dispositif de commande selon la revendication 1,
**caractérisé en ce que**
le bord de la couronne (31) du ressort différentiel (3) comporte des évidements (311) formant des évents permettant l'échange d'air entre la cavité, formée par la couronne (31) et l'extérieur, le bord extérieur de la base (33) de la couronne (31) ayant un joint périphérique (312).

7. Dispositif selon la revendication 1,
caractérisé en qu'il comprend
un piston auxiliaire (41) occupant la surface d'appui de capteur (121b) pour recevoir l'effort du ressort différentiel (3) exercée sur la surface d'appui de capteur (121b) et transmettre cet effort au capteur (4).

## Patentansprüche

1. Steuervorrichtung des Bremssystems eines Fahrzeugs, umfassend:
- eine Struktur (1) in Form eines flachen Gehäuses,
- eine Betätigungsplatte (2) auf dem Oberteil (11) der Struktur (1), die beweglich ist zwischen einer Ruheposition, die bezüglich des Oberteils (11) angehoben ist, und einer Betätigungsposition, die bezüglich der Ruheposition in Abhängigkeit von dem Druck (F) niedergedruckt ist, der auf die Platte (2)
- vom Fahrer zum Anfordern einer Bremsung ausgeübt wird, und
- einen Kraftsensor (4),
wobei die Betätigungsplatte (2) mit dem Kraftsensor (4) durch eine Differentialfeder (3) verbunden ist, die eine Grundfläche (30) aufweist, die auf einer Auflagefläche (121a) der Struktur (1) aufliegt, die mit einer Sensorauflagefläche (121b) kombiniert ist, die einen Bruchteil der Grundfläche (30) darstellt, um die auf die Platte (2) ausgeübte Kraft zwischen der Strukturauflagefläche (121a) und der Sensorauflagefläche (121b) aufzuteilen, wobei die Vorrichtung **dadurch gekennzeichnet ist, dass** die Differentialfeder (3) aus einem elastischen Umfangskranz (31), der auf der Strukturauflagefläche (121a) aufliegt, und einer elastischen zentralen Kuppel (32), die auf der Sensorauflagefläche (121b) aufliegt, besteht, wobei der Oberteil des elastischen Kranzes (31) und derjenige der elastischen Kuppel (32) die Auflagefläche der Platte (2) bilden, und wobei die Differentialfeder (3) ein Formteil aus einem elastisch verformbaren inkompressiblen Material ist, wobei der Kranz (31) einen dreieckigen oder trapezförmigen Querschnitt aufweist, der mit der zentralen Kuppel (32) durch einen Unterteil (33) verbunden ist.

2. Vorrichtung nach Anspruch 1,
**dadurch gekennzeichnet, dass**
die Struktur (1) einen im Oberteil (11) der Struktur (1) mündenden Zylinder (12) aufweist, der einen mit der Platte (2) verbundenen Kolben (13) aufnimmt und einen Boden (121) aufweist, der einen Auflagekranz (121a') bildet, welcher die Strukturauflagefläche (121a) bildet, und eine Sensorauflage (121b'), welche die Sensorauflagefläche (121b) bildet.

3. Vorrichtung nach Anspruch 1,
**dadurch gekennzeichnet, dass** sie umfasst:
- eine Hilfsfeder (22), die in Reihe mit der Differentialfeder (3) angeordnet ist und den Druck der Platte (2) aufnimmt,
- einen Schwimmkolben (13a) zwischen der Hilfsfeder (22) und der Differentialfeder (3) und
- einen Anschlag (131) zwischen dem Schwimmkolben (13a) und der Platte (2), der den Weg der Hilfsfeder (22) auf einen Weg (a) begrenzt, um bei Überschreitung einer Kraft (F1), die dem Auflaufen des Schwimmkolbens (13a) auf den Anschlag entspricht, nur die Differentialfeder (3) allein wirken zu lassen.

4. Vorrichtung nach Anspruch 1,
**dadurch gekennzeichnet, dass**
- die Auflagefläche der Struktur (121a) ein Auflagekranz (121a') ist und
- die Sensorauflagefläche (121b) die Fläche ist, die von dem Auflagekranz (121a') des Bodens (121) umgeben ist, so dass die auf den Oberteil der Platte (2) ausgeübte Kraft (F) auf den Auflagekranz (121a') und auf die Sensorauflage (121b') übertragen wird.

5. Vorrichtung nach den Ansprüchen 3 und 4,
**dadurch gekennzeichnet, dass**
der Schwimmkolben (13a) umfasst:
- einen Anschlag (131) auf dem Oberteil des Kolbens (13a), um das Intervall (a) mit der Platte (2) zu bilden, um mit den zwei in Reihe angeordneten Federn (3; 13) während der ersten Bewegungsphase der Platte (2) bis zu einem Druckschwellenwert (F1), der dem Kontakt zwischen dem Anschlag (131) und der Platte (2) entspricht, und durch eine zweite Bewegungsphase der Betätigung der Platte (2) bei Überschreitung des Schwellenwertes (F1) mit der Differentialfeder (3) allein zu funktionieren.

6. Steuerungsvorrichtung nach Anspruch 1,
**dadurch gekennzeichnet, dass**
der Rand des Kranzes (31) der Differentialfeder (3) Vertiefungen (311) aufweist, welche Lüftungsöffnungen bilden, die den Luftaustausch zwischen dem von dem Kranz (31) gebildeten Hohlraum und der Außenseite ermöglichen, wobei der Außenrand des Unterteils (33) des Kranzes (31) eine Umfangsdichtung (312) aufweist.

7. Vorrichtung nach Anspruch 1,
**dadurch gekennzeichnet, dass** sie umfasst:
einen Hilfskolben (41), der die Sensorauflagefläche (121b) einnimmt, um die Kraft der Differentialfeder (3) aufzunehmen, die auf die Sensorauflagefläche (121b) ausgeübt wird, und diese Kraft auf den Sensor (4) zu übertragen.

## Claims

1. Device for controlling the braking system of a vehicle, comprising:
- a structure (1) in the form of a flat casing,
- an actuating pad (2) on the top (11) of the structure (1), which is movable between a rest position, raised with respect to the top (11), and an actuating position, depressed with respect to the rest position in dependence on the pushing force (F) exerted on the pad (2)
- by the driver to request braking, and
- a force sensor (4),
wherein the actuating pad (2) is connected to the force sensor (4) by a differential spring (3) having a base surface (30) abutting against a bearing surface (121a) of the structure (1) combined with a sensor bearing surface (121b) representing a fraction of the base surface (30) so as to distribute the force exerted on the pad (2) between the structure bearing surface (121a) and the sensor bearing surface (121b), the device being **characterized in that** the differential spring (3) is composed of an elastic peripheral ring (31) abutting against the structure bearing surface (121a) and an elastic central dome (32) abutting against the sensor bearing surface (121b), the top of the elastic ring (31) and that of the elastic dome (32) constituting the bearing surface of the pad (2), and wherein the differential spring (3) is a moulded component made of an incompressible, elastically deformable material, the ring (31) having a triangular or trapezoidal cross section connected to the central dome (32) by a base (33).

2. Device according to Claim 1,
**characterized in that**
the structure (1) has a cylinder (12), opening in the top (11) of the structure (1), receiving a piston (13) connected to the pad (2) and having a bottom (121) forming a bearing ring (121a') constituting the structure bearing surface (121a) and a sensor support (121b') constituting the surface bearing surface (121b).

3. Device according to Claim 1,
**characterized in that** it comprises
- an auxiliary spring (22) in series with the differential spring (3) and receiving the pushing force from the pad (2),
- a floating piston (13a) between the auxiliary spring (22) and the differential spring (3), and
- a stop (131) between the floating piston (13a) and the pad (2) limiting the travel of the auxiliary spring (22) to a travel (a), so as to only involve the differential spring (3) on its own beyond a force (F1) corresponding to the coming into abutment of the floating piston (13a).

4. Device according to Claim 1,
**characterized in that**
- the bearing surface (121a) of the structure is a bearing ring (121a'), and
- the sensor bearing surface (121b) is the surface surrounded by the bearing ring (121a') of the bottom (121) such that the force (F) exerted on the top of the pad (2) is transmitted to the bearing ring (121a') and to the sensor support (121b').

5. Device according to Claims 3 and 4,
**characterized in that**
the floating piston (13a) comprises:
- a stop (131) on the top of the piston (13a) so as to form the spacing (a) with the pad (2), in order to operate with the two springs (3; 13) in series during the first phase of the movement of the pad (2) until a pushing-force threshold (F1) corresponding to the contact between the stop (131) and the pad (2) is reached, and with only the differential spring (3) through a second phase of actuating movement of the pad (2) beyond the threshold (F1).

6. Control device according to Claim 1,
**characterized in that**
the edge of the ring (31) of the differential spring (3) has cutouts (311) forming vents for exchanging air between the cavity, formed by the ring (31), and the outside, the outer edge of the base (33) of the ring (31) having a peripheral seal (312).

7. Device according to Claim 1,
**characterized in that** it comprises
an auxiliary piston (41) occupying the sensor bearing surface (121b) so as to receive the force from the differential spring (3) exerted on the sensor bearing surface (121b) and transmit this force to the sensor (4).
